# EUROPÄISCHE PATENTSCHRIFT

(11) **EP 2 722 310 B1**
(45) Veröffentlichungstag und Bekanntmachung des Hinweises auf die Patenterteilung: **22.07.2015**
(21) Anmeldenummer: 13188066.8
(22) Anmeldetag: 10.10.2013
(51) Int. Cl.: C01B 33/107

(54) **Verfahren zur endothermen Gasphasenreaktion in einem Reaktor**
Process for endothermic gas phase reaction in a reactor
Procédé de réaction endothermique en phase gazeuse dans un réacteur

(30) Priorität: 17.10.2012 DE 102012218941
(43) Veröffentlichungstag der Anmeldung: 23.04.2014
(73) Patentinhaber: Wacker Chemie AG, 81737 München (DE)
(72) Erfinder: Hirschmann, Andreas, 94140 Ering (DE); Häckl, Dr. Walter, 84367 Zeilarn (DE); Pätzold, Dr. Uwe, 84489 Burghausen (DE)
(74) Vertreter: Killinger, Andreas

(56) Entgegenhaltungen:
- EP-A1- 1 770 058
- EP-A1- 1 775 263
- EP-A1- 2 368 626
- DE-A1-102011 002 749
- US-A1- 2011 200 512

## Beschreibung

Gegenstand der Erfindung sind ein Reaktor und ein Verfahren zur endothermen Gasphasenreaktion in einem Reaktor.

Ein Beispiel für eine solche Reaktion ist die Konvertierung von Siliciumtetrachlorid (STC) mit Wasserstoff zu Trichlorsilan (TCS) und HCl. Die Konvertierung von STC mit Wasserstoff zu Trichlorsilan findet üblicherweise in einem Reaktor bei hohen Temperaturen statt, bei wenigstens 600°C, idealerweise bei wenigstens 850°C. Die relative Selektivität ist durch den molaren Anteil von Trichlorsilan zu Siliciumtetrachlorid gegeben. Sie ist ein Maß dafür, wie viel von dem eingesetzten STC in TCS umgesetzt wird und bestimmt damit die Wirtschaftlichkeit des Verfahrens.

In US 4,536,642 A werden eine Vorrichtung und ein Verfahren zur Konvertierung von Siliciumtetrachlorid STC zu Trichlorsilan TCS beschrieben.

Die Edukte werden durch den Einlass in das Gefäß gebracht und innerhalb der drei aufeinanderfolgenden Wärmetauscher mit Hilfe des heißen Abgases auf Temperatur gebracht. Die Heizelemente erwärmen die Edukte bis zur Endtemperatur im Reaktionsbereich des Konverters. Die Reaktionsprodukte werden zusammen mit den nicht reagierten Edukten in einem Rohr zu den Wärmetauschern geführt bevor sie den Konverter durch die Öffnung wieder verlassen. Die verwendeten Wärmetauscher bestehen aus Graphit.

Sowohl die Heizelemente als auch die Wärmetauscher zeigen vermehrt Korrosion, was zu Ausfall des Reaktors führt. Ferner werden die Heizelemente durch Wasserstoff einer mehr oder weniger starken Korrosion ausgesetzt, was auf lange Sicht zu einem Ausfall des Reaktors führen kann.

In US 2008/112875 A1 wird ein Verfahren zur Konvertierung von STC zu TCS beschrieben, bei dem ein besonderes Augenmerk auf die Abkühlrate des Prozessgases im Wärmetauscher gelegt wird. Für die Wärmetauscher werden Materialien wie SiC, Siliciumnitrid, Quarzglas oder mit SiC geschichteter Graphit verwendet. Diese Materialien haben den Vorteil, dass sie nur bedingt mit zum Beispiel Wasserstoff reagieren und reduzieren daher die oben beschriebene Probleme. Sie zeigen zusätzlich aber den erheblichen Nachteil, dass der konstruktive Aufwand sehr hoch ist.

US 2012/0151969 A1 offenbart ein Verfahren zur Hydrierung von Chlorsilanen in einem Reaktor, wobei mindestens zwei Eduktgasströme getrennt voneinander in eine Reaktionszone eingebracht werden, wobei der erste Eduktgasstrom beinhaltend Siliciumtetrachlorid durch eine erste Wärmetauschereinheit geführt wird, in der er aufgeheizt wird, und dann über eine Heizeinheit geführt wird und dabei auf eine erste Temperatur aufgeheizt wird bevor der erste Eduktgasstrom die Reaktionszone erreicht, und wobei der zweite Eduktgasstrom beinhaltend Wasserstoff durch eine zweite Wärmetauschereinheit auf eine zweite Temperatur aufgeheizt wird, wobei die erste Temperatur größer ist als die zweite Temperatur, und dann in die Reaktionszone eingebracht wird, so dass die mittlere Gastemperatur in der Reaktionszone zwischen 850°C und 1300°C liegt und zu Produktgasen, umfassend Trichlorsilan und Chlorwasserstoff, reagieren, wobei die bei der Reaktion erzeugten Produktgase durch die besagten wenigstens zwei Wärmetauschereinheiten geführt werden und nach dem Gegenstromprinzip die Eduktgasströme der Reaktion vorheizen, wobei zunächst die erste Wärmetauschereinheit und danach die zweite Wärmetauschereinheit durchströmt wird.

Weiterhin zeigt US 2012/0151969 A1 einen Reaktor zur Hydrierung von Chlorsilanen, umfassend zwei Gaseinlassvorrichtungen, durch die Eduktgase getrennt voneinander in den Reaktor eingebracht werden können, und wenigstens eine Gasauslassvorrichtung, durch die ein Produktgasstrom geführt werden kann, wenigstens zwei Wärmetauschereinheiten, die miteinander verbunden sind und die geeignet sind, Eduktgase durch die durch die Wärmetauschereinheiten geführten Produktgase getrennt voneinander aufzuheizen sowie eine Heizzone, die zwischen einer ersten Wärmetauschereinheit und einer Reaktionszone angeordnet ist und in der sich wenigstens ein Heizelement befindet.

US 2012/0151969 A1 beschreibt zudem einen Reaktor zur Hydrierung von Chlorsilanen, umfassend einen Behälter, der eine Mantelfläche, einen unteren sowie einen dem unteren Boden gegenüberliegenden oberen Boden sowie mindestens eine Einlassvorrichtung für einen Eduktgasstrom und mindestens eine Auslassvorrichtung für einen Produktgasstrom enthält, mindestens ein kreisförmiges Heizelement oder mehrere kreisförmig angeordnete Heizelemente, wenigstens vier zylindrische Umlenkeinrichtungen für Gas, die konzentrisch im Behälter angeordnet sind, geeignet, am oberen oder am unteren Boden des Reaktors strömendes Gas umzulenken, wobei der Radius einer ersten zylindrischen Umlenkeinrichtung größer und der Radius der wenigstens drei weiteren Umlenkeinrichtungen kleiner ist als der Radius des kreisförmigen Heizelementes oder kleiner als der Radius des Kreises, auf dem die Heizelemente angeordnet sind, mindestens eine weitere Einlassvorrichtung für ein Eduktgas, die kreisförmig am unteren Boden des Behälters angebrachte Düsen umfasst, wobei der Radius des Kreises, auf dem die Düsen angeordnet sind, größer ist als der Radius einer der Umlenkeinrichtungen und kleiner als der Radius einer jener Umlenkeinrichtung benachbarten Umlenkeinrichtung.

Im Stand der Technik kommt es zu einer ungleichmäßigen Abnutzung der Heizelemente und zu häufigen Reaktorstillständen aufgrund von ausgefallenen Heizelementen. Bei der Hydrierung von Chlorsilanen zeigt sich zudem eine Verringerung der Konvertierrate durch den Ausfall von Heizelementen.

Aus dieser Problematik ergab sich die Aufgabenstellung der vorliegenden Erfindung.

Die Aufgabe der Erfindung wird gelöst durch ein erstes Verfahren zur endothermen Gasphasenreaktion gemäss Anspruch 1.

Bei dem Verfahren erfolgt vorzugsweise ein Aufheizen der Eduktgase durch wenigstens zwei Wärmetauscher. Vorzugsweise erfolgt das Aufheizen der Eduktgase analog US 2012/0151969 A1, wobei ein erstes Eduktgas durch einen ersten Wärmetauscher und ein zweites Eduktgas durch einen zweiten Wärmetauscher aufgeheizt wird.

Die Erfindung basiert auf der Erkenntnis, dass in solchen Reaktoren nach dem Stand der Technik bauartbedingt eine gleichmäßige Gasströmung über die gesamte Heizzone nicht sichergestellt war. Durch ungleichmäßige Gasströmungen wurden verschiedene Bereiche mehr oder weniger belastet als andere, welches durch verschiedene Abnutzung/Korrosion der einzelnen Heizelemente zu beobachten war. Anhand einer Schadens-Wahrscheinlichkeitsdarstellung konnten Rückschlüsse auf die in den Heiz- und Reaktionszonen herrschenden Gasströmungen gezogen werden.

Bei der Gasverteilungsvorrichtung kann es sich um eine Gasverteilerplatte oder um eine Gasverteilerblende handeln. In seiner einfachsten Ausführung handelt es sich um ein planares Element mit wenigstens einer Öffnung.

Die Gasverteilungsvorrichtung ist vorzugsweise zwischen Wärmetauscher und Heizzone verbaut.

Durch die Gasverteilungsvorrichtung werden Eduktgase gleichmäßig über den gesamten Querschnitt in die Heizzone verteilt.

Wesentlich für das Gelingen der Erfindung war es, dafür zu sorgen, dass die Gasverteilung in alle Richtungen gleichmäßig erfolgt und in allen Bereichen der Heizzone ein annähernd gleicher Gasfluss herrscht.

Durch die Gasverteilungsvorrichtung lässt sich der Mengenstrom an Gas pro Heizelement vereinheitlichen.

Der "Heizraum" bzw. alle Heizelemente werden gleichmäßig belastet.

Der Alterungsprozess bzw. die Abnutzung an den Heizelementen ist über den gesamten Reaktions-Querschnitt gleichmäßig verteilt.

Die Schadenswahrscheinlichkeit an den Heizelementen mit Einbau einer Gasverteilungsvorrichtung wurde um 33% reduziert. Dies hat direkten und positiven Effekt auf die zu erzielende Laufzeit.

Es hat sich gezeigt, dass sich durch Einbau einer Gasverteilervorrichtung die durchschnittliche Laufzeit des Reaktors gegenüber dem Stand der Technik um mindestens 30% steigern lässt.

Ebenso zeigt sich im Falle der Konvertierung von Siliciumtetrachlorid und Wasserstoff eine Steigerung des Umsatzes zu Trichlorsilan um 5%.

Die Einstellung der Reaktionstemperatur in der Reaktionszone des Reaktors erfolgt durch das Aufheizen der Heizelemente.

Die gewünschte Reaktortemperatur lässt sich mittels einer Temperaturfühlers, z.B. eines Thermoelements, bestimmen. Durch Messung der Temperatur in der Reaktionszone wird ein Messsignal erzeugt, welches zur Regelung der Heizelemente in der Heizzone verwendet werden kann.

Nun hat sich im Rahmen der Erfindung gezeigt, dass eine leicht unterschiedliche Position des Temperaturfühlers zu ganz unterschiedlichen gemessenen Temperaturen des Reaktors führen kann, was wiederum zu ungünstigen thermischen Bedingungen für die Fahrweise des Reaktors führen kann. Dies äußert sich zum Beispiel in einer verringerten Konvertierrate und damit ungünstigeren Wirtschaftlichkeit des Prozesses.
Der Ausfall beispielsweise eines Heizelementes bewirkt zunächst ein Sinken der Temperatur in der Reaktionszone. Dieses Sinken der Temperatur wird durch den Temperaturfühler erkannt und durch eine entsprechende Erhöhung der Leistung der verbleibenden Heizelemente kompensiert.

Lokal weisen die verbleibenden Heizelemente aber durch die erhöhte Leistung eine höhere Oberflächentemperatur auf, so dass es lokal zu erhöhter Bildung von Nebenprodukten kommen kann. Dies ist mit einer Verringerung der gesamten Konvertierrate verbunden, was wiederum zu einer Verringerung der Wirtschaftlichkeit des Prozesses führt.

Bei der Messung des Temperaturunterschiedes zwischen mehreren Orten innerhalb der Reaktionszone eines Reaktors kann festgestellt werden, dass offenbar auch ohne Störungen wie Heizelementausfälle unterschiedliche Temperaturen in der Reaktionszone vorliegen.

Unterschiedlichen Temperaturen im Reaktor liegen neben unterschiedlichen Gasmengen auch daran, dass die Heizelemente in ihrer Bauart nicht konstant sind. Es liegen sowohl Schwankungen in der Materialqualität als auch Schwankungen in den Abmaßen der Heizelemente vor und dies unabhängig vom Design der Heizelemente, die Heizrohre, Heizlatten oder Heizelemente in Mäanderform umfassen können.

Um dennoch für gleiche Bedingungen zu sorgen, könnte die Oberflächentemperatur eines jeden Heizelementes separat bestimmt und geregelt werden. Stattdessen wird die Gastemperatur in der Heizzone gemessen.

Endotherme Gasphasen-Reaktionen zeichnen sich dadurch aus, dass durch den hohen laminaren Gasfluss keine quer gerichtete Ausgleichsströmung messbar ist.

Die Gasphase wird für die Reaktion über aktive und direkt umströmte Heizelemente auf Temperatur von vorzugsweise 500-1500°C, besonders bevorzugt 700 - 1300°C, gebracht bzw. gehalten.

Die Gasströmung von Eintritt in die Heizzone bis zur Reaktionszone erfolgt von einer äußeren Anordnung (zylindrischen oder quadratischen) nach Innen.

Dabei ist eine Gruppe der Heizelemente an der äußeren Anordnung angebracht.

Eine weitere Gruppe von Heizelementen kann aber auch zudem an einer mittleren Anordnung angebracht sein.

Die wenigstens zwei Temperaturfühler sind erst zu Beginn der Reaktionszone angebracht, nicht jedoch in der Heizzone.

Die Anordnung der Heizelementgruppen kann je Gruppe kreisförmig, aber auch quadratisch oder ellipsenförmig sein.

Um eine kompakte Reaktorbauweise zu ermöglichen, sind Gasumlenkvorrichtungen im Heizbereich vorteilhaft. Dies dient auch der Erhöhung der Heiz- und Reaktionszeit, da sich dadurch eine Vergrößerung des Reaktionsraumes zwischen Heizelement und Gas-Temperaturmessung ergibt. Dies dient unter anderem auch der Reduzierung der Energieverluste.

Nach der Reaktion in der Reaktionszone erfolgt eine Abkühlung der Prozessgase durch Einleiten in einen Wärmetauscher. Damit wird die Gasphasen-Reaktion beendet.

Liegt jetzt ein Ausfall eines Heizelementes vor, so wird im Umkreis des Heizelementes die Gasphase nicht über die Heizelemente direkt erhitzt, sondern nur über die Abstrahlung der Bauteile (z.B. der Gasumlenkvorrichtungen).

Dies ist nicht so effektiv wie der direkte Kontakt zu sehr viel heißeren Heizelementoberflächen.

Da es zudem keine quergerichtete Ausgleichsströmung gibt, gelangt dieses nur schwach erhitzte Gas bis zu den Temperaturfühlern, wo die Temperaturmessung erfolgt.

Es zeigte sich, dass jeder Heizelement-Ausfall direkt an den jeweiligen Temperaturfühlern durch Temperaturabfall in der Heizzone erkennbar ist.

D.h. bei Ausfall einzelner Heizelemente sinkt die Reaktortemperatur in direkter Umgebung des Ausfalles um bis zu 50 K und damit dort auch der chemische Umsatz bzw. die Ausbeute, welches negativ auf den Gesamtumsatz des Reaktors einwirkt.

Werden nun mehrere Temperaturmessungen - wenigstens zwei - in der Reaktionszone vorgenommen, können die Ausfälle exakt den jeweiligen Temperaturen zugeordnet werden.

Falls die Reaktortemperatur zur Regelung des Reaktors verwendet wird, ist dafür zu sorgen, dass unabhängig von Ausfällen und Eigenschaften der Heizelemente eine im Heizraum konstant gleiche Temperatur vorliegt und damit überall in der Heiz- und Reaktionszone gleiche Bedingungen vorherrschen.

Dies ist zu bewerkstelligen, indem zur Reaktortemperatur-Regelung der Gasphasenreaktion mindestens zwei Temperaturmessungen in der Reaktionszone vorgenommen werden, wobei eine Regeltemperatur anschließend aus den Temperaturmessungen berechnet wird.

Als Regeltemperatur wird vorzugsweise der aus allen Temperaturmessungen gebildete Mittelwert verwendet.

In die Berechnung der Regeltemperatur können geometrische Eigenschaften des Reaktors und/oder der Heizzone bzw. Anordnung der Temperaturfühler im Reaktor berücksichtigt werden, indem die einzelnen Temperaturen in der Temperatur-Regel-Berechnung verschieden gewichtet werden.

Durch die Mittelwert-Berechnung hat sich gezeigt, dass die jeweiligen Temperaturabweichungen von der gewünschten Reaktionstemperatur innerhalb der Reaktionszone reduziert werden.

Bislang wurde dieser Temperaturabfall direkt nach Ausfall des Heizelementes dadurch kompensiert, dass die Leistung der verbliebenen Heizelemente entsprechend sprunghaft erhöht wurde, damit die Reaktortemperatur auf konstantem Temperatur-Niveau blieb. Dies bedeutete aber, dass aufgrund eines Heizelement-Ausfalles die Reaktionstemperatur an den anderen Heizelementen um bis zu 50 K erhöht wurde, wobei höhere Temperaturen - wie zuvor beschrieben - die Bildung von Nebenprodukten begünstigen, was unerwünscht ist.

Ebenso führt eine Erhöhung der Einzelleistung auf die Heizelemente zu einer erhöhten Belastung der Heizelemente, welches im schlimmsten Fall zu vermehrter Korrosion an den Heizelementen und zu weiteren Heizelement-Ausfällen führt.

Fällt im Zuge der Reaktorfahrt ein weiteres Heizelement, welches innerhalb des gleichen Temperaturfühlers liegt, aus, so erhöht sich die Temperaturdifferenz zwischen den einzelnen Temperaturfühlern um weitere bis zu 50 K.

Die Wahrscheinlichkeit, dass die Heizelemente vorzeitig defekt werden und/oder ausfallen, ist maßgeblich für die Gesamtlaufzeit des Reaktors.

Vorzugsweise beträgt die mittlere Abweichung vom Mittelwert der an den Temperaturfühlern gemessenen Temperaturen daher maximal 50 K.

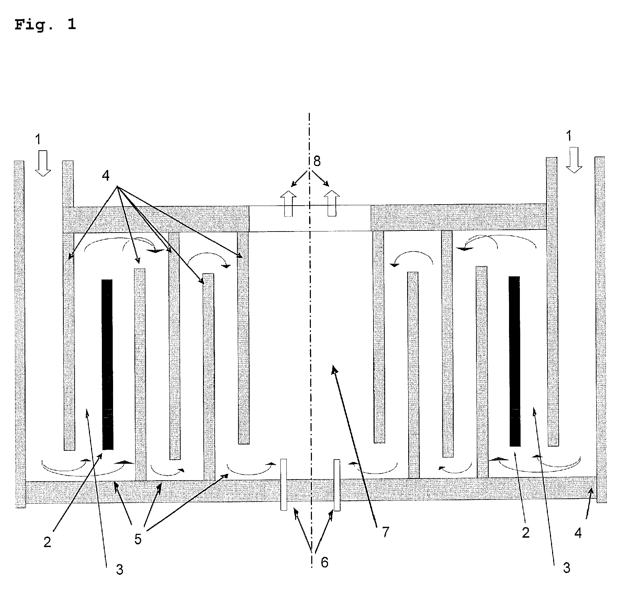

**Fig. 1** zeigt eine zur Durchführung des Verfahrens geeignete Vorrichtung.

### Liste der Bezugszeichen

- **1**: Gaszuführung incl. Verteilervorrichtung
- **2**: Heizelemente
- **3**: Heizzone
- **4**: Umlenkvorrichtung
- **5**: Gasführung
- **6**: zwei Temperaturmess-Einrichtungen
- **7**: Reaktionszone
- **8**: Gasabführung

Die Erfindung betrifft allgemein endotherme Gasphasen-Reaktionen.

Die nachfolgenden Beispiele beziehen sich auf die Konvertierung von Siliciumtetrachlorid in Trichlorsilan.

### Beispiele

### Beispiel 1 (Vergleichsbeispiel)

Für das Vergleichsbeispiel wurde ein Reaktor gemäß US 4,536,642 verwendet.

Es wurde ein Gasgemisch im Eduktstrom bestehend aus 33 mol% Siliciumtetrachlorid und 67 mol % Wasserstoff verwendet. Die Eintrittstemperatur des Eduktgasstroms betrug etwa 175°C.

Der Druck wurde zu 6 bar und die Temperatur des Gases in der Reaktionszone auf 1000°C eingestellt.

Das Produktgas wurde nach der Reaktion in einem Gaschromatographen untersucht, wobei die Anteile von Trichlorsilan und Siliciumtetrachlorid bestimmt wurden. Die Temperatur des austretenden Produktgasstroms betrug etwa 350°C.

Die relative Selektivität ist durch den molaren Anteil von Trichlorsilan zu Siliciumtetrachlorid gegeben.

Der Einfachheit halber wird die im Vergleichsbeispiel erreichte relative Selektivität mit 100% definiert, wenn alle Heizelemente funktionsfähig sind.

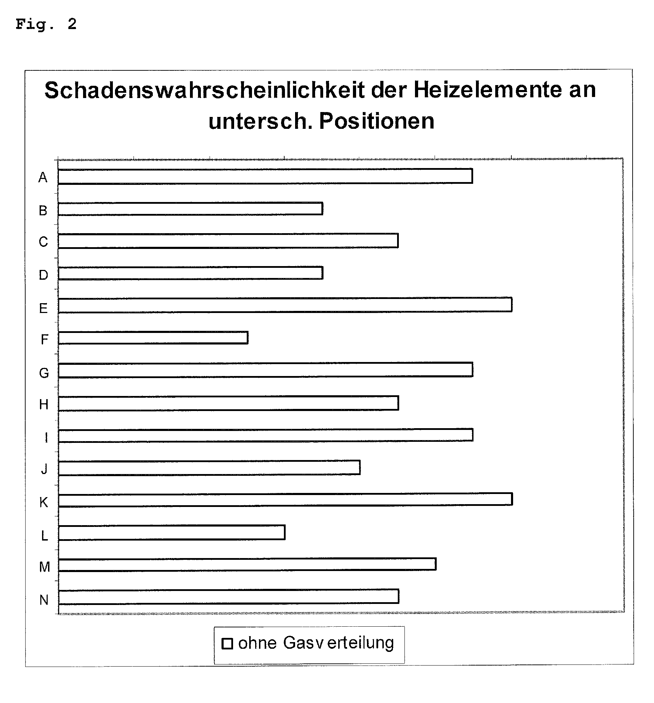

**Fig. 2** zeigt die relative Schadenswahrscheinlichkeit der einzelnen Heizelemente als Funktion der Heizelementnummer für das Vergleichsbeispiel.

Es ist zu erkennen, dass die räumliche Verteilung des Auftretens von Schäden an den Heizelementen offenbar keinen erkennbaren Gesetzmäßigkeiten gehorcht.

Dies stellt den Stand der Technik dar.

Ist mindestens ein Heizelement ausgefallen, wird die Leistung der übrig gebliebenen funktionierenden Heizelemente derart nachgeregelt, so dass die Soll-Temperatur, die in der Mitte der Reaktionszone mit einem Temperaturfühler gemessen wird, beibehalten wird.

Es wurde jedoch festgestellt, dass bei bereits einem ausgefallenen Heizelement die relative Selektivität auf etwa 97 % sinkt.

Der Nebenproduktanfall ist um 3% angestiegen.

### Beispiel 2

In **Beispiel 2** werden im Wesentlichen dieselben Rahmenbedingungen verwendet wie in **Beispiel 1.**

Jedoch wird die Gaszuführung anhand einer Gasverteilungsvorrichtung besser in die Heizzone verteilt.

Die Gasverteilungsvorrichtung vergleichmäßigt über unterschiedliche Gasdurchlass-Abmaße den zuführenden Gasstrom entlang der Gaszuführung in die zylindrische Heizzone.

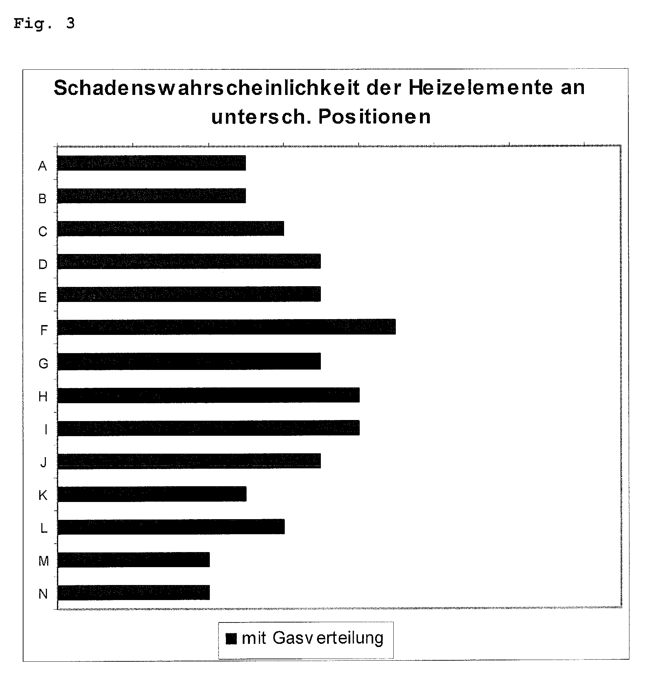

**Fig. 3** zeigt eine deutliche Verbesserung der Schadenswahrscheinlichkeit durch den Einbau einer Gasverteilungsvorrichtung.

Die willkürlichen Schadensfälle werden zu einer systematischen Verteilung verändert.

In **Fig. 3** ist weiterhin eine ungleichmäßige, aber systematische Verteilung der zuführenden Gasphase erkennbar.

Die relative Schadenswahrscheinlichkeit der Heizelemente verringert sich und der Reaktor kann länger betrieben werden.

Durch die jetzt systematische Gasverteilung kann anhand weiterer Optimierungsschritten die Vorrichtung zur besseren Gasverteilung entsprechend der Geometrie jedes einzelnen Reaktors angepasst und weiter verbessert werden.

Dies ist zu bewerkstelligen, indem die Abmaße der Verteilungsvorrichtung weiter angepasst werden.

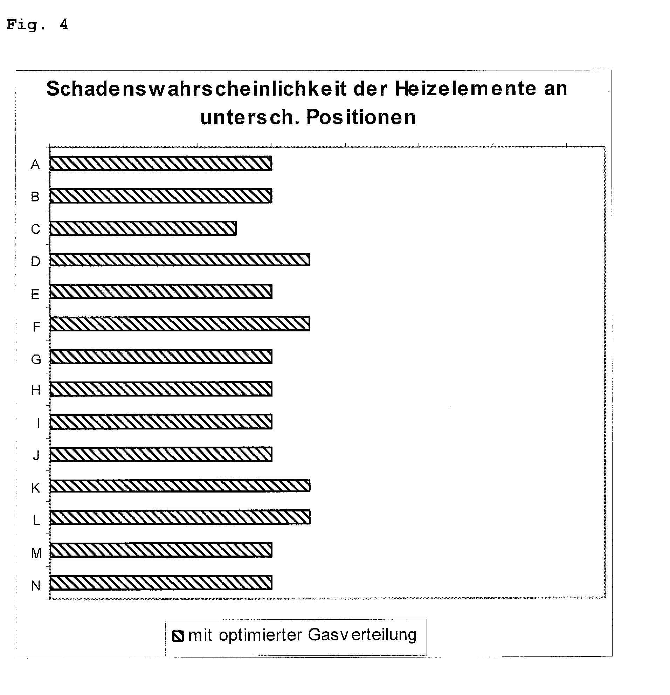

**Fig. 4** zeigt die optimierte Schadenswahrscheinlichkeit der Heizelemente, welche auf jedes Element gleichmäßig verteilt ist.

Im Vergleich zu **Fig. 3** ist jedoch keine Reduzierung der Anzahl an Schäden erkennbar.

Diese optimierte Schadensverteilung ist für jeden Reaktor individuell zu erstellen und zeigt hier die systematische Darstellung.

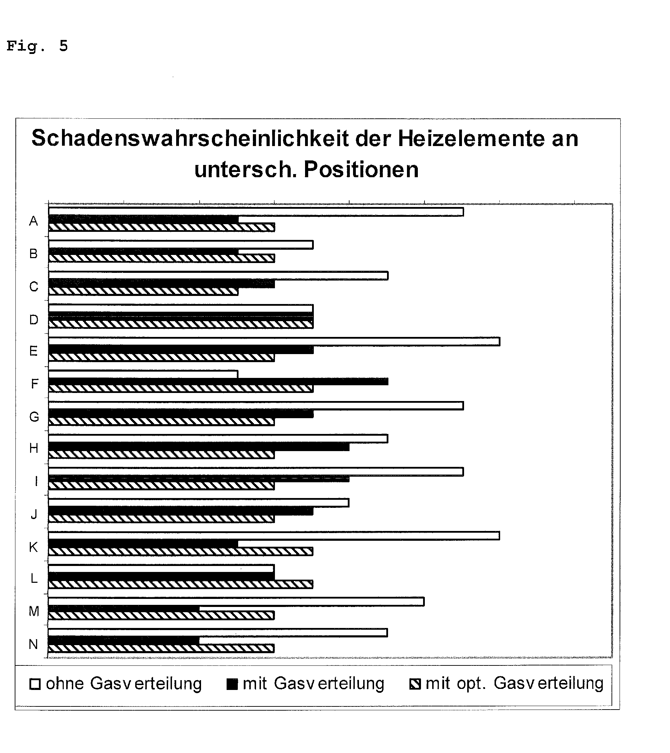

**Fig. 5** zeigt den direkten Vergleich der unterschiedlichen Schadenswahrscheinlichkeiten.

Die relative Schadenswahrscheinlichkeit der Heizelemente verringert sich und der Reaktor kann länger betrieben werden.

### Beispiel 3

In **Beispiel 3** werden im Wesentlichen dieselben Rahmenbedingungen verwendet wie in **Beispiel 1.**

Jedoch wird die Reaktionszone mit zusätzlichen vier Temperaturmesseinrichtungen ausgestattet, so dass es möglich ist, die Temperatur in der Reaktionszone zusätzlich ortsaufgelöst zu messen.

Die Temperaturmesseinrichtungen sind radial um den Mittelpunkt der Bodenplatte innerhalb der Reaktionszone angeordnet.

In **Fig. 1** ist die Position von zwei dieser zusätzlichen Temperaturmesseinrichtungen 6 exemplarisch gezeigt.

Wird die Bestimmung der Temperatur nicht wie in **Beispiel 1** beschrieben mit lediglich einer Temperaturmesseinrichtung durchgeführt, sondern mit dem Mittelwert aller Werte aus den zur Verfügung stehenden Temperaturmesseinrichtungen, zeigt sich, dass bei Ausfall eines Heizelementes die relative Selektivität nur auf 99,5 % absinkt, da der direkte Temperatureinfluss auf die Regeltemperatur reduziert ist.

Die unerwünschten Nebenprodukte aus einer erhöhten Reaktionstemperatur treten nur noch bis zu 0,5% auf.

### Beispiel 4

In **Beispiel 4** werden zusätzlich zu **Beispiel 2** die Heizelemente so geregelt, dass die Abweichung der gemessenen Temperaturen an den Heizelementen vom Mittelwert ΔT minimal ist.

Dies geschieht zu jedem Zeitpunkt.

Es hat sich herausgestellt, dass, auch wenn alle Heizelemente funktionsfähig sind, es signifikante Unterschiede bei den Temperaturen geben kann.

Dies ist vermutlich durch die Geometrie der Heizzone (und damit der Gasströmung) und/oder der Geometrie der Heizelemente begründet.

Wird ein ΔT von kleiner als 50 K eingestellt, wenn alle Heizelemente funktionsfähig sind, kann eine relative Selektivität von 110 % im Vergleich zu Beispiel 1 erreicht werden.

Selbst wenn ein Heizelement nicht mehr funktionsfähig ist, wird immer noch eine relative Selektivität von 107 % im Vergleich zu **Beispiel 1** erreicht.

Auch hier verringert sich die relative Schadenswahrscheinlichkeit der Heizelemente.

Die Laufzeit, der Umsatz und die Sicherheit des Reaktors kann dadurch deutlich verlängert bzw. erhöht werden.

## Patentansprüche

1. Verfahren zur Konvertierung von Siliciumtetrachlorid mit Wasserstoff zu Trichlorsilanin einem Reaktor, bei dem Eduktgase über eine Gaseinlassvorrichtung in den Reaktor eingebracht und mittels einer Gasverteilungsvorrichtung gleichmäßig in eine Heizzone verteilt werden, in der die Eduktgase mittels Heizelementen auf eine mittlere Temperatur von 500-1500°C aufgeheizt und anschließend in eine Reaktionszone geführt werden, wobei das Aufheizen der Heizelemente durch Temperaturmessungen in der Reaktionszone gesteuert wird, wobei zu diesem Zweck wenigstens zwei Temperaturfühler in der Reaktionszone vorhanden sind, wobei die Eduktgase in der Reaktionszone zu einem Produktgas reagieren, das schließlich über eine Gasauslassvorrichtung aus dem Reaktor geführt wird, wobei es sich bei den Eduktgasen um Siliciumtetrachlorid und Wasserstoff handelt, die bei einer Temperatur von wenigstens 600°C zu Trichlorsilan und HCl reagieren.

2. Verfahren nach Anspruch 1, wobei die mittlere Abweichung der an den Temperaturfühlern bestimmten Temperaturen von deren Mittelwert maximal 50 K beträgt.

3. Verfahren nach einem der Ansprüche 1 bis 2, wobei wenigstens ein Wärmetauscher vorgesehen ist, der Eduktgas nach dem Gegenstromprinzip durch bei der Reaktion erzeugtes Produktgas erwärmt, wobei die Gasverteilungsvorrichtung zwischen Wärmetauscher und Heizzone angeordnet ist.

## Claims

1. Process for conversion of silicon tetrachloride with hydrogen to trichlorosilane in a reactor, in which reactant gases are introduced into the reactor via a gas inlet apparatus and distributed homogeneously by means of a gas distribution apparatus into a heating zone, in which the reactant gases are heated to a mean temperature of 500-1500°C by means of heating elements and then conducted into a reaction zone, wherein the heating of the heating elements is controlled by temperature measurements in the reaction zone, at least two temperature sensors being present in the reaction zone for this purpose, and the reactant gases reacting in the reaction zone to give a product gas which is finally conducted out of the reactor via a gas outlet apparatus, wherein the reactant gases are silicon tetrachloride and hydrogen, which react at a temperature of at least 600°C to give trichlorosilane and HCl.

2. Process according to Claim 1, wherein the mean deviation of the temperature determined at the temperature sensors from the mean thereof is not more than 50 K.

3. Process according to either of Claims 1 and 2, wherein at least one heat exchanger is provided, which heats reactant gas by the countercurrent principle by means of product gas produced in the reaction, the gas distribution apparatus being arranged between heat exchanger and heating zone.

## Revendications

1. Procédé pour la conversion de tétrachlorure de silicium avec de l'hydrogène en trichlorosilane dans un réacteur, dans lequel les gaz de départ sont introduits via un dispositif d'introduction de gaz dans le réacteur et répartis au moyen d'un dispositif de répartition des gaz, régulièrement, dans une zone de chauffage, dans laquelle les gaz de départ sont chauffés au moyen d'éléments chauffants à une température moyenne de 500-1500°C, et ensuite guidés dans une zone de réaction, le chauffage des éléments chauffants étant régulé par des mesures de température dans la zone de réaction, au moins deux sondes de température étant présentes dans la zone de réaction à cette fin, les gaz de départ réagissant dans la zone de réaction en un gaz produit qui est finalement évacué du réacteur via un dispositif d'évacuation de gaz, les gaz de départ étant du tétrachlorure de silicium et de l'hydrogène, qui réagissent à une température d'au moins 600°C en trichlorosilane et en HCl.

2. Procédé selon la revendication 1, la déviation moyenne des températures déterminées au niveau des sondes de température par rapport à leur valeur moyenne étant de maximum 50 K.

3. Procédé selon l'une quelconque des revendications 1 à 2, au moins un échangeur de chaleur étant prévu, qui chauffe le gaz de départ selon le principe du contre-courant par le gaz produit généré lors de la réaction, le dispositif de répartition des gaz étant disposé entre l'échangeur thermique et la zone de chauffage.
